# EUROPEAN PATENT APPLICATION

(11) **EP 2 017 983 A1**
(43) Date of publication of application: **21.01.2009**
(21) Application number: 07720624.1
(22) Date of filing: 30.03.2007
(51) Int. Cl.: H04B 17/00

(54) **A DEBUGGING METHOD AND APPARATUS FOR PERFORMING TELECOM CLASS SERVICE DEVELOPMENT BASED ON MODEL DRIVEN**

(30) Priority: 24.04.2006 CN 200610076005
(71) Applicant: Huawei Technologies Co., Ltd., Shenzhen, Guangdong Province 518129 (CN)
(72) Inventor: JIANG, Guowen, Shenzhen, Guangdong Province 518129 (CN); JU, Zejian, Shenzhen, Guangdong Province 518129 (CN)
(74) Representative: Pfenning, Meinig & Partner GbR
(86) International application number: PCT/CN2007/001050
(87) International publication number: WO 2007/121658

(57) **Abstract**

A debugging method and apparatus for performing telecom-class service development based on model driven. It is achieved to combine the debugging information of the code debugger and the model display to complete the graphics context debugging of the telecom-class service based on model driven through inversely searching the primitive according to the code when the graphics context debugging is being carried. The debugging method and apparatus provide debugging ability based on MDA for the telecom-class service development tool, realize to arrive at the actual graphics context debugging not using any simulator, and realize the graphics context debugging of the telecom-class service based on model driven of the remote files.

## Description

### Field of the Invention

The present invention relates to communication technology field, particularly to a debugging method and apparatus for developing telecom-class service based on model driven.

### Background of the Invention

As software becomes increasingly enormous and complex now, software design and implementation become more and more difficult, which results in the evolution of the software development mode and software development tools. Viewed from the evolution of the software development, with the programming language evolved from the assembly language to the procedural language and then to the Object-oriented language, and the development tools evolved from the editor+assembler/compiler to the full-functional integrated developing environment and then to the MDA (model driven architecture) which has been developing and becoming more popular. The level of the abstraction of the software development is higher and higher.

With highly abstracted models as the core, the MDA is a development mode which can automatically generate effective and correct codes by constructing models, so that the software developers need not to face problems such as endless syntax errors and memory leakage, etc. As a software development mode that can improve the productivity and reduce the software development complexity, the MDA is used increasingly in the industry.

Software debugging is inevitable during software development. As a necessary part of software development flow, software debugging can find a variety of errors resulted from negligence or inconsideration during software development. Though the probability of errors is reduced greatly in the MDA development mode, lower-layer errors become more hidden since the developers are at a higher level of abstraction, and error locating will become more difficult. For that reason, the debugger is required to be more intelligent to feed back running errors of the lower-layer program to the upper-layer model and scripts so as to implement graphics context debugging.

In the existing MDA-based integrated developing environments, usually simple model operation simulators are provided in order to implement the software debugging function. Such simulators can simulate the running procedures of the program, so that possible logic errors in the programs can be found during simulation. Such simulators are a sort of simple debuggers. For example, in some commercial software such as Rhapsody, TeleLogic Tau, and Rational Rose for RT, the codes generated for a service developed can be compiled into Windows programs or UNIX programs by invoking an external compiler. Then these programs are controlled to run, and the program running traces are displayed dynamically on the model diagram during the running of the program.

The above existing commercial development tools that support the model development are usually oriented to embedded devices and can conveniently implement the development and debugging of service software with simple logic. However, for telecom-class service software with complex logic, those tools cannot satisfy the application requirements very well.

In addition, in above development tools, since the program being debugged does not run in the final running environment, the debugger is not an actual debugger but a simulator. Thus, it is difficult to find in simulation some hidden errors that may occur in the actual running environment, and it is also difficult to locate the errors even if they are found in the actual running procedures.

Besides the foresaid local compilation and debugging, there is also a demand for remote compilation and debugging in the development of the MDA-based telecom-class services. The MDA-based services are usually developed on PCs and are compiled and debugged in actual running environments (a variety of UNIX servers) of the service. In such cases, the model-level debugging can only be carried out remotely. The existing commercial software that implements remote compilation and debugging, such as MagicC++ of MagicUnix, provides a developing environment similar to Visual C++ in Windows and implements the remote compilation and debugging by telnet or a customized protocol, ftp protocol, etc.

There are some other software that supports remote compilation and debugging by means of "stub programs". For example, UniWin locally provides "stub programs" for server programs such as gdb debugger, gcc compiler, etc. Those "stub programs" are local agents of the remote programs, and they are mainly designed to accomplish the transmission of the commands and responses between local side and remote side so as to implement a simple relay function.

The existing remote compilation and debugging software do not provide a function of model-based development; instead, such software still only support the complete manual coding mode. Such development mode cannot meet the challenge for the software services which become larger and larger. In addition, in the "stub program" mode, a "stub program" has to be provided for each of the remote programs to be invoked, otherwise the remote program without the corresponding stub program cannot be executed. Thus, such mode is poor in expansibility.

### Summary of the Invention

Embodiments of the present invention provide a debugging method and apparatus for developing telecom-class service based on model driven.

An embodiment of the present invention is accomplished with the following technical solution.

An embodiment of the present invention provides a debugging method for developing telecom-class service based on model driven. In performing debugging operation, the diagram element is inversely searched in accordance with code so that the debugging information of a code debugger is combined with model display to achieve graphics context debugging based on model driven.

An embodiment of the present invention provides a debugging apparatus for developing telecom-class service based on model driven, the apparatus comprising:

a debugging control module configured to control the debugging operation of program files, search inversely the diagram element in accordance with code, and combine the debugging information of a code debugger with model display to achieve graphics context debugging based on model driven.

It can be seen from the above technical solutions provided by embodiments of the present invention that the embodiments of the present invention provide debugging ability based on MDA for telecom-class service development tools and realize the actual graphics context debugging without using any simulator.

### Brief Description of the Drawings

Fig. 1 is an operation flow chart of the method according to an embodiment of the present invention;

Fig.2 is a diagram showing the remote process creation procedure according to an embodiment of the present invention;

Fig.3 is a schematic diagram showing the mapping relation between the code and the model diagram element according to an embodiment of the present invention;

Fig.4 is a schematic diagram showing the state transition of the state diagram according to an embodiment of the present invention;

Fig.5 is a schematic diagram showing the content and insertion position of the inserted codes according to an embodiment of the present invention; and

Fig.6 is a schematic diagram showing the apparatus according to an embodiment of the present invention.

### Detailed Description of the Embodiments

Embodiments of the present invention provide a debugging method and apparatus for telecom-class service development based on model driven. A command line code debugger is used on the lower-layer of the graphics context debugger to control the service software to run in the actual running environment, and the debugging information of the code debugger is combined with the model display on upper-layer so as to realize graphics context debugging in the actual environment.

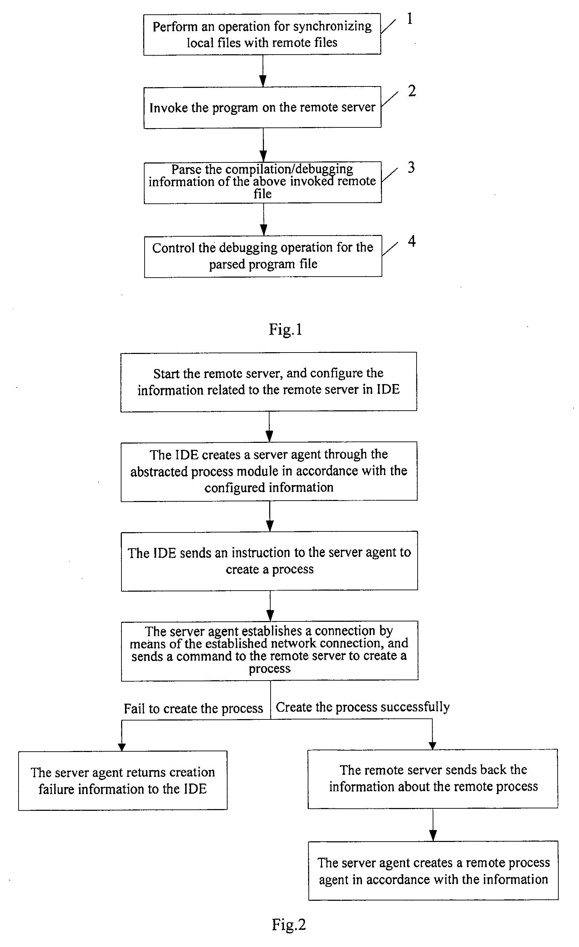

Embodiment 1 of the present invention provides a debugging method for telecom-class service development based on model driven. Remote debugging operation is exemplified in the present embodiment. The operation process comprises the following steps, as shown in Fig. 1.

Step 1: performing an operation for synchronizing local file with remote file

The synchronization operation can be implemented by the method of remote file mirroring or file time stamps comparison, etc. The file synchronization operation is executed dynamically in accordance with the change of the local and remote files.

Step 2: invoking the compiler and code debugger program on the remote server

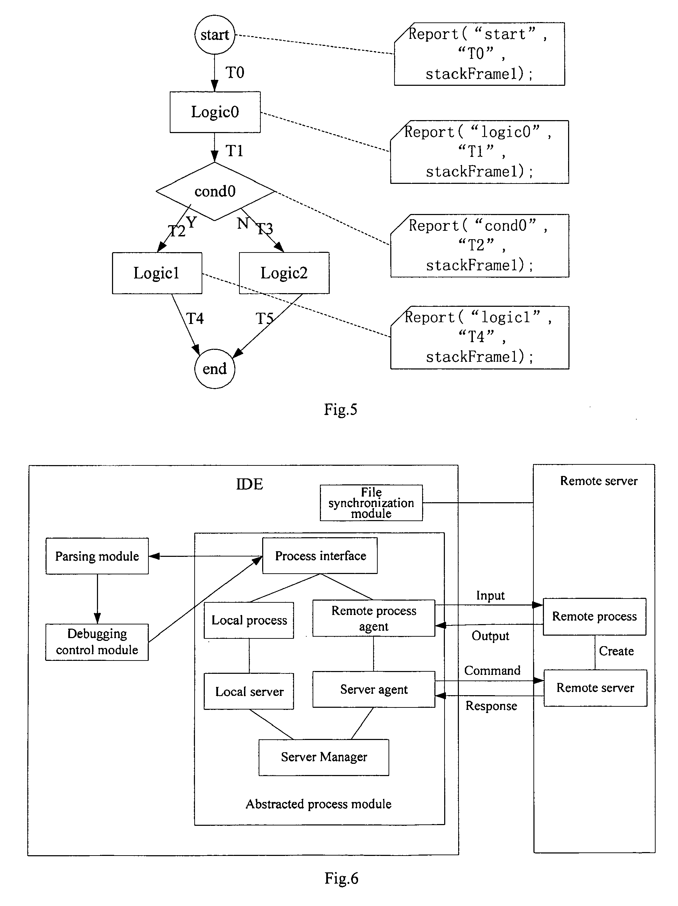

The embodiment utilizes client/server architecture and puts forward an abstracted process model to implement a process interface in java, so that the remote program can be invoked in java just like a local program, and the upper-layer IDE (Integrated Development Environment) codes can interact with the remote program without any modification. The remote abstracted process model and the remote process invocation procedure are shown in Fig.2 and Fig.6 in detail.

Step 3: parsing the compilation/debugging information of the above invoked remote file

Due to the fact that different compilers/debuggers provide outputs in different formats, in terms of the outputs, a unified access interface is provided for the upper-layer by corresponding parsing modules, so that the parsing of the remote compilation result and the control of the remote debugging process can be implemented.

Step 4: controlling the debugging procedure of the parsed program file

The debugging procedure of the compiled program file is as follows.

While debugging on the model, operations, such as tracking the operation trace of the service in graphics and codes, performing single-step operations, setting breakpoints, displaying invocation stacks, and displaying and modifying variable values in real time, etc, need to be performed.

The debugging operations are accomplished in the case that corresponding codes are generated for each diagram element and are compiled into the executable program in the flow. It is inevitable to insert breakpoints at some positions and execute single-step operation during tracking the program execution flow.

The single-step operation includes single-step operation for code, single-step operation for script, and single-step operation for diagram element. The code debugger supports single-step operation at code line level. Step Into, Step Over, and Step Out operations for code can be implemented by sending step, next, or finish command to the code debugger, respectively.

In single-step operation for script, the semantics of Step Into, Step Over and Step Out are identical to that in C/C++ code debugging; all of them are different single-step method with respect to function call.

In single-step operation for diagram element, for a method invocation diagram element, Step Into refers to jumping to the corresponding method; for a script logical block diagram element, Step Into refers to jumping into the user's script. Step Over refers to stepping over a diagram element normally. Step Out refers to jumping out from the current context, for example, if the current point is in a certain state diagram, with Step Out, the process will jump out from the state diagram.

Hereunder the Step Into, Step Over, and Step Out of the single-step operation will be described, respectively.

Step Into

As for Step Into in diagram element, the process may shift to another method diagram element, or may jump from the graphical view to the user's script corresponding to the current script diagram element, and the subsequent single-step operation will change to a single-step operation for script. Step Into in other cases is identical to Step Over operation.

As for Step Into in script, if there is strict mapping relation between script and code, it is only required to perform Step Into operation for the code corresponding to the script. Step Into for script is identical to Step Over where there is no function call.

Step Over

When stepping over a diagram element, the position of the next diagram element needs to be ascertained. If the current point has been in an end diagram element already, Step Over for diagram element is identical to the Step Out operation.

In order to ascertain the position of the next diagram element, one way is to search in IDE for all possible diagram elements of next step and set temporary breakpoints at the entries of these possible diagram elements, and then instruct the code debugger to run the program being debugged. When the program pauses at a certain breakpoint, the position of the next diagram element can be ascertained thereby. As for the temporary breakpoint that is inserted, it can be inserted before each single-step operation and then deleted after the single-step operation. Since these breakpoints are useful only for the current single-step operation while with no use in other cases and are small in quantity (usually one or several), the insertion and deletion operations will not consume much time.

If an exception is thrown in the codes generated from the state diagram and the exception is not caught in the codes, the program will jump out from the current state diagram without passing through the breakpoint set in advance. Once an exception occurs, the invocation stack will roll back continuously until a parent function that can handle that exception is found. Typical code debugger (e.g., gdb) itself provides 'catch' command to set catchpoints. A catchpoint is similar to a breakpoint, which can be used to suspend the program when a dynamic library is loaded, a C++ exception is thrown, or a C++ exception is caught. Therefore, the program can be suspended with 'catch catch' command when a C++ exception is captured, and then jump to the code that handles the exception with a line single step command (e.g., 'next'). The position on the diagram element can be inversely searched according to the code position; thereby diagram element debugging can be implemented. The method for inversely searching the diagram element from the code will be described later.

Not all code debuggers support 'catch catch' command. By analyzing the 'catch catch' command, it is found that when the program pauses because a C++ exception is captured, the code actually stops at a certain library function that captures the exception. For example, in library "glibc" of Linux, it is _cxa_begin_catch function, that function is a library function provided by library "glibc" to which the program jumps when a C++ exception is captured. When a code debugger that does not support 'catch catch' command is used, a breakpoint can be set at that library function to attain the same effect as the 'catch catch' command. C++ exceptions can be handled by such method.

Another way for ascertaining the next diagram element is not to utilize breakpoints. Instead, after the user sends a command of single step for diagram element, the code debugger is instructed to run the single step command repetitively. Which diagram element the current code line belongs to is checked every time the single-step operation stops, which includes the following three cases.

One case is that the current code line still belongs to the current diagram element. In that case, it is continued to instruct the code debugger to run the single step command.

The second case is that the current code line does not belong to any diagram element. In that case, the code debugger is needed to continue running the single step command.

The last case is that the current code line belongs to another diagram element. In that case, the single step for diagram element is completed normally and stops.

With such method, it is unnecessary to predict all possible jumping positions or insert additional breakpoints. If there are not many code lines that are executed in the diagram element, the method of the code line single-step operation has apparent advantage. However, such method is not suitable for the cases where there are long loops in the diagram element. For the gdb code debugger, the 'until' command provided in the code debugger can be utilized to jump over long loops. Actually, the 'until' command is still executed by way of single step instruction, and it is faster than 'next' single step operation by several times to over ten times depending on the CPU speed. The 'until' command can be used cooperating with an argument to specify a stop position. Thus, the code debugger can jump over the loop by way of inserting a breakpoint at that stop position, which will improve the efficiency greatly.

Therefore, for the method of the code line single-step operation, the 'until' command can be utilized to jump over long loops, which needs to know the line number where the long loops end. For the method for inserting breakpoint all positions that the single step may reach need to be predicted and then breakpoints are inserted at those positions. In actual implementation, the specific method to be used can be chosen from the two methods by comparing implementation difficulty and effect of the two options.

Step Over for script is similar to Step Into for script. If there is strict mapping relation between script and code, it is only required to perform Step Over operation on the code corresponding to the script.

Step Out

There are two methods for Step Out for diagram element. One is to set temporary breakpoints at the exits of all current end diagram elements and then instruct the code debugger to run the program. When the program pauses at a certain breakpoint, the code debugger is instructed to perform single-step operation repetitively until the program jumps out from the current context.

The other method is based on such a presumption that each state diagram is mapped to a function. Therefore, the code debugger is repetitively instructed to run 'finish' command to jump out from the current function. If it is found that the program jumps out of the current context (including jumping out of the diagram element code that the program jumped into) or jumps out of the current state diagram, the Step Out operation ends.

As for user's script, since the user may jump out from a certain line in the script (e.g., with 'return' statement), it is unable to ascertain how many exits there are in the script unless the user's script is parsed. Therefore, Step Out for script can also be implemented by instructing the code debugger to run the 'finish' command repetitively until the program jumps out of the range of the current script.

If it is permitted that pseudo-synchronization code is contained in the script, only the method of the repetitive single-step operation can be used.

Besides the above-mentioned single-step debugging operations, debugging operations further comprise starting running, pausing running, and end debugging, etc. which are mainly to send different commands to the code debugger and update the display on the interface.

Like the operation of inserting code, the operation of setting a breakpoint for a diagram element can insert a breakpoint at the entry to the diagram element. When a breakpoint is set for a script, the only need is to find the code line corresponding to the certain script line and directly instruct the code debugger to insert a breakpoint there. Since typical code debuggers support setting of conditional breakpoints, it is possible to set conditional breakpoints for diagram element or script.

In addition, viewing and modifying local variable or global variable, viewing value of expression, viewing and modifying memory block, disassembling code segment, viewing and modifying register, viewing invocation stack, etc. are also included during debugging. Those operations can be accomplished by directly using the corresponding function of the code debugger.

The above debugging operation procedure involves a procedure that the IDE locates the diagram element according to the reported code, that is, the corresponding diagram element is located inversely in accordance with the position of the code. The embodiment of the present invention provides the following three methods to implement diagram element inversely searching in accordance with code.

1) Logging the line number of the corresponding code for each diagram element, and inversely searching the diagram element in accordance with the line number

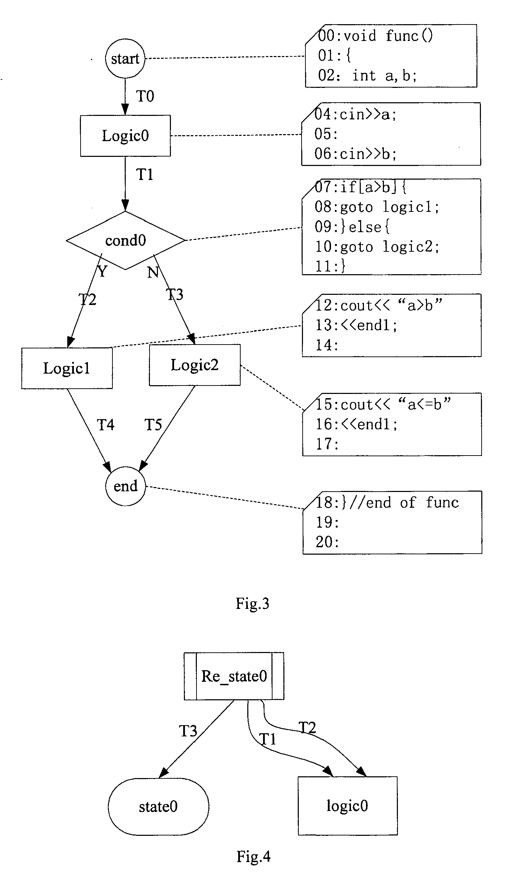

Figure 3 shows the mapping relation between diagram element and code, the left side shows a flow for implementing the user's logic, which comprises block diagram elements connected by transition lines. The transition lines specify the execution flow of the program which is executed from the starting diagram element through transition line T0 to logical block diagram element logic0, thereafter is executed through transition line T1 to conditional branch diagram element cond0. The transition line itself may also contain logic and can be generated to code. The right side of Figure3 shows a code sample automatically generated in accordance with such flow. The corresponding codes are generated for each diagram element in the implementing flow of the user's logic. As shown in Figure 3, code lines 0 to 2 are generated from the starting diagram element, the logical block diagram element logic0 corresponds to code lines 4 to 6, and the conditional branch diagram element condO corresponds to code lines 7 to 11. The mapping relation between the diagram element and the line number of code is stored in the project. When debugging is performed, the current code line number is obtained from the debugger, and then is located to the diagram element directly by means of the mapping relation.

For example, when the program being debugged encounters a breakpoint and stops during debugging, which diagram element the program stops at should be displayed in the IDE. That procedure is as follows: the program encounters a breakpoint and stops running, pauses at memory address AA; the source code debugger converts AA to line LL of the source code file SS in accordance with the debugging information in the program; the IDE finds the corresponding diagram element identifier FF from line LL in file SS in accordance with the mapping relation between diagram element and the line number of the generated code; and the operating interface displays the stop position of the current program in accordance with the identifier.

When the user adds breakpoint, the mapping relation is also utilized but in reverse direction, and thus the procedure thereof is: the user selects a diagram element FF on the IDE interface and then adds a breakpoint to it; the IDE finds the code lines L1 to L2 in file SS corresponding to the diagram element FF in accordance with the mapping relation between diagram element and code line; the IDE sends an instruction to the source code debugger to set a breakpoint at line L1 in file SS; and the source code debugger sets a breakpoint at memory address AA corresponding to line L1 in accordance with the debugging information of the program being debugged.

The mapping relation from the line number to the diagram element can be described in the following format.

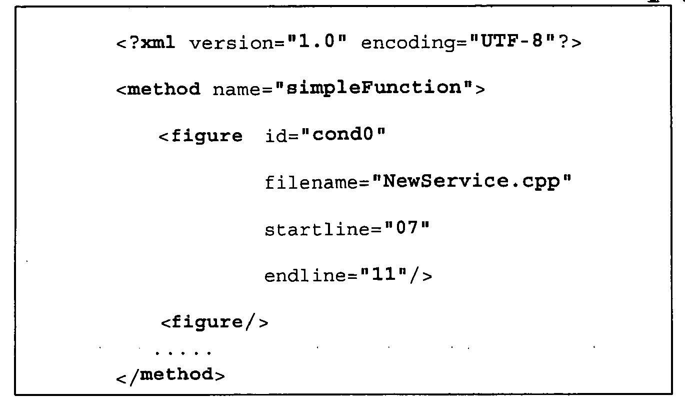

It can be seen that the codes generated for logical block diagram element cond0 correspond to lines 7 to 11 in file NewService.cpp.

2) Adding special annotation information in source code, and inversely searching the diagram element in accordance with the annotation information

When the code is generated for diagram element, some special annotation information can be used to indicate which diagram element the current part of code correspond to. For example, XML label can be added in the annotation, and then the generated source code can be parsed by using an existing XML parser. When a line number is known, the corresponding annotation information can be looked for forward, and the diagram element corresponding to the line number can be found by analyzing the annotation information.

3) Inserting special report code in source code, and inversely searching the diagram element in accordance with the report code

In the generated source code, report code is inserted at place that affects graphical display so as to feed back the update information of the graphics to the IDE.

For example, a report code is inserted at the ends of the code corresponding to the diagram element. When the program runs to that position, the report code feeds back the information of the diagram element to the IDE, and the IDE logs the information for later displaying the running trace on the graphic.

After the report code is inserted, every time the code enters a new diagram element during debugging, report information will be sent to the IDE. The report information will be highly frequent, thus it is unnecessary to update the graphical display every time. Instead, it only needs to update the graphical display in accordance with the last report information when the target program is suspended by the code debugger.

Hereunder the method for inserting report code will be described.

In the state diagram, one source state may have a plurality of exit transition lines directed to several different target states, or there may have a plurality of exit transition lines directed to the same target state, as shown in Figure 4. In Figure 4, the reusable state diagram element Re_state0 has three exit transition lines, wherein both transition lines T1 and T2 transmit, to logical block diagram element logic0 and transition line T3 transits to state diagram element state0. In this case, in order to identify the path of the state transition, the inserted code needs to be placed at the exit position of each state. That is to say, report code must be inserted at each exit of the diagram element. Therefore, there are three pieces of report information in the code generated for diagram element Re_state0, which correspond to three exit points, respectively. The report information comprises the ID of the current diagram element and the ID of the exit transition line. The IDE can reconstruct the running trace of the entire program in accordance with all of the report information.

As for script diagram element in state diagram element, it needs not to display the running trace in the script, and script diagram element cannot contain 'return' statement in accordance with the requirement of the code generation and cannot throw exceptions initiatively. Therefore, no matter how many exits there are in the script logic, the script diagram element only has one exit, and for a script diagram element, it is only required to insert a report code at the end position of the script diagram element.

For transition line with script, since the trace thereof has been marked by the state diagram element of the starting point, it is unnecessary to insert report code.

In order to support debug version and release version to use the same code, it is preferable to define the report code in the format of macro. The report code can be defined as follows.

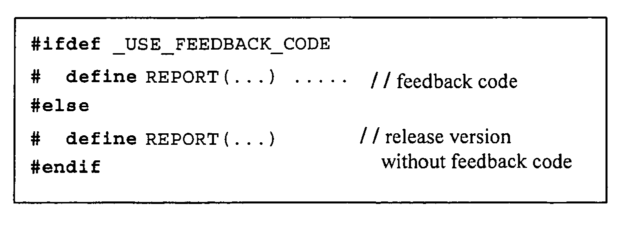

Thus, when reporting the information, it simply needs to call REPORT(...). A macro _USE_FEEDBACK_CODE is defined in the debug version, and REPORT will be expanded to the report code. In the release version, that macro is not defined, and all report codes are defined as void, which will not affect the code of the release version.

As the debugged program runs during debugging, the REPORT instruction reports to the IDE sequentially the diagram element information that the program has run through network communication or pipe. After the IDE receives these traces, the traces are stored in a trace list. When the program pauses, these traces can be displayed. As shown in Figure 5, the program starts to run from the starting diagram element 'start'. At the exit of the diagram element 'start'. Report command will report to the IDE the ID of the diagram element 'start', the ID of the transition line T0 and the current stack frame identifier of the current thread. The IDE records the information. When the program runs to the state diagram logic1 finally, the trace that has run will be marked, and the current position will also be marked.

Hereunder the procedure for creating a remote process by the user in Figure 2 will be described in detail.

First, the remote server is initiated, and the information of the remote server such as ip, port, user name and password, etc. is configured in the IDE. The IDE establishes connection to the remote server through the network in accordance with the information configured. If the configuration information is incorrect (e.g. port is wrong, password is wrong, etc.), the connection will fail, the remote process cannot be created, and the IDE will notify the user to modify the configuration. If the connection succeeds, the abstracted process module will create a server agent locally in accordance with the connection information. The IDE sends an instruction to create a process to the server agent. The server agent sends the instruction to the remote server through the established network connection, and the remote server creates a remote process. If the remote server fails to create the process, failure information is returned to the server agent, and the server agent will notify the IDE of the failure of creating process. If the remote server creates the process successfully, the information of the created remote process is sent back to the server agent, and the server agent creates a remote process agent in accordance with the information. The remote process agent establishes connection to the remote process in accordance with the information sent back from the remote server. The server agent returns the remote process agent object to the IDE. An identical Process interface is realized for the remote process agent object and the local process object. The IDE can use the remote process agent in the same way as a local process is used.

The flow for terminating a remote process is as follows.

If the remote process ends, its parent process, i.e., the remote server, will receive a notification signal. After the remote server receives the notification signal, a Process End event is sent to the remote server agent object connected to the remote server. After the remote server agent receives the Process End event, the corresponding remote process agent object is found in accordance with the process number, and the thread that is waiting for the termination of the process is activated. The flow for terminating a remote process is over.

The flow that the IDE terminates a remote process initiatively is as follows.

The IDE sends a Terminate Process command to the remote server agent where the process agent object is located. The remote server agent sends a Close Process command to the connected remote server. The remote server closes the corresponding remote process by 'kill'. After the remote process is closed, the remote server receives a notification signal. The remote server sends a Process End event to the remote server agent connected to the remote server. After the remote server agent receives the Process End event, the corresponding remote process agent object is found in accordance with the process number and the thread that is waiting for the termination of the process is activated. The flow that the IDE terminates a remote process initiatively is over.

It can be seen that the abstracted process module encapsulates the information of the remote process, and the IDE can use the remote process in the same way as a local process is used after the information of the remote server is configured. There is no any limitation to the process to be run, which is greatly convenient for the development of the remote compilation and debugging.

The embodiment 2 of the present invention provides a debugging apparatus for telecom-class service development based on model driven. A schematic diagram of the structure of the apparatus is shown in Figure 6. The apparatus comprises a file synchronization module, an abstracted process module, a parsing module and a debugging control module.

The file synchronization module is configured to execute an operation for synchronizing the local files with the remote files. The synchronization operation can be implemented by the method of remote file mirroring or file time stamp comparison, etc. The file synchronization operation is performed dynamically in accordance with the change of the local and remote files.

The abstracted process module is connected to the remote server. A remote server agent can be created in accordance with the information of the remote server configured by the IDE. The remote server agent is used to establish connection to the remote server, carry out information interaction with the remote server, and create a remote process agent in accordance with the remote process information fed back by the remote server. The remote process agent establishes connection to the remote process in accordance with the information fed back by the remote server. The remote server agent returns the process agent object to the IDE, so that it is implemented that the process agent object and the local process object use the same process interface, thereby the IDE can obtain the remote process in the same way as a local process is obtained.

The parsing module is configured to parse the output information of the remote compiler and the code debugger, judge whether the remote compilation operation is abnormal or not, and parse the information returned by the code debugger.

The debugging control module is configured to control the debugging operation of the program file so as to combine the control information and the running result of the code debugger with the model display and the control commands during debugging; thereby an actual graphics context debugging is achieved.

To sum up, the embodiments of the present invention provide the MDA-based debugging ability for telecom-class service development tool and achieve actual graphics context debugging without using any simulator.

While the present invention has been illustrated and described with reference to the preferred embodiments, the present invention is not limited to these. Those skilled in the art should recognize that various variations and modifications can be made without departing from the spirit and scope of the present invention as defined by the accompanying claims.

## Claims

1. A debugging method for developing telecom-class service based on model driven, comprising:
searching inversely diagram element in accordance with code when performing debugging operation; and
combining the debugging information of a code debugger with model display to achieve graphics context debugging based on model driven.

2. The debugging method for developing telecom-class service based on model driven of claim 1, wherein the debugging operation comprises single-step operations which further comprise Step Into, Step Over, and/or Step Out, it is required to ascertain the position of a next diagram element in the Step Over operation,
wherein the ascertaining the position of the next diagram element comprising:
searching for all possible diagram elements for the next step by an integrated developing environment (IDE) and setting temporary breakpoint at the entry of the diagram elements;
running the program to be debugged by a command code debugger;
ascertaining the breakpoint where program stops to be the position of the next diagram element; and
deleting the inserted breakpoint.

3. The debugging method for developing telecom-class service based on model driven of claim 1,
wherein the debugging operation comprises single-step operations which further comprise Step Into, Step Over, and/or Step Out, it is required to ascertain the position of a next diagram element in the Step Over operation,the ascertaining the position of the next diagram element comprises:
instructing the code debugger to run the single-step command continuously after receiving a command of the single-step operation for diagram element, and checking the diagram element to which the current code line belongs every time the single-step operation stops;
continuing executing the single-step operation if the current code belongs to the current diagram element or do not belong to any diagram element;
terminating the single-step operation for diagram element if the current codes belong to another diagram element.

4. The debugging method for developing telecom-class service based on model driven of claim 1, wherein when a remote file is handled, the method further comprising:
performing dynamic file synchronization process in accordance with the change of the local files and the remote files;
invoking a remote compiler and a remote code debugger by a local IDE to compile and debug the remote files; and
performing a process for parsing the information of the code debugger.

5. The debugging method for developing telecom-class service based on model driven of claim 4, wherein the synchronization process comprises remote file mirroring or file time stamp comparison.

6. The debugging method for developing telecom-class service based on model driven of any one of claims 1 to 5, wherein the searching inversely diagram element in accordance with the code comprises:
recording the line number of the code corresponding to each diagram element, and inversely searching the diagram element in accordance with the line number; or
adding annotation information in source code, and inversely searching the diagram element in accordance with the annotation; or
inserting report code in source code, and inversely searching the diagram element in accordance with the report code.

7. The debugging method for developing telecom-class service based on model driven of claim 6, wherein the inserting report code in source code comprises:
inserting the report code at the code corresponding to the exit position of the diagram element to report the information;storing the information by the IDE and constructing the program running trace in accordance with all reported information.

8. The debugging method for developing telecom-class service based on model driven of claim 7, wherein the reported information comprises a current diagram element identifier and an exit transition line identifier.

9. The debugging method for developing telecom-class service based on model driven of claim 7, wherein the report code is defined in the format of macro.

10. A debugging apparatus for developing telecom-class service based on model driven, comprising:
a debugging control module configured to control the debugging operation of program files, search inversely the diagram element in accordance with code, and combine the debugging information of a code debugger with model display to achieve graphics context debugging based on model driven.

11. The debugging apparatus for developing telecom-class service based on model driven of claim 10, wherein the apparatus further comprises:
a file synchronization module configured to perform an operation for synchronizing local file with remote file, the file synchronization operation being performed dynamically in accordance with the change of the local file and the remote file;
an abstracted process module configured to provide a unified interface for local process and remote process to invoke the local process and the remote process; and
a parsing module configured to parse the output information of the remote compiler and the code debugger and the information returned by the code debugger.

12. The debugging apparatus for developing telecom-class service based on model driven of claim 11, wherein the abstracted process module further comprises:
a remote server agent created in accordance with remote server information configured by IDE, which performs information interaction with the remote server and is configured to create a remote process agent in accordance with the remote process information fed back by the remote server; and
the remote process agent created by the remote server agent in accordance with the information fed back by the remote server, which establishes connection to the remote process in accordance with the information fed back by the remote server and returns process agent object to IDE so that the process agent object and the local process object use the same process interface.
